# EUROPÄISCHE PATENTANMELDUNG

(11) **EP 3 258 302 A1**
(43) Veröffentlichungstag der Anmeldung: **20.12.2017**
(21) Anmeldenummer: 17000994.8
(22) Anmeldetag: 12.06.2017
(51) Int. Cl.: G02B 6/44

(54) **SPLEISSKASSETTE ZUM SPLEISSEN UND VERBINDEN VON GLASFASERN IN EINEM VERTEILERSCHRANK**

(30) Priorität: 14.06.2016 DE 102016007178
(71) Anmelder: Langmatz GmbH, 82467 Garmisch-Partenkirchen (DE)
(72) Erfinder: Werner, Ertl, 82490 Farchant (DE)
(74) Vertreter: Flosdorff, Jürgen

(57) **Zusammenfassung**

Die Spleißkassette zum Spleißen und Verbinden von Glasfasern in einem Verteilerschrank, ist dadurch gekennzeichnet, dass anstelle einer herkömmlichen Crimp-Spleißschutz-Ablage ein WDM-Filter auf der Spleißkassette befestigbar ist.

## Beschreibung

Die Erfindung betrifft eine Spleißkassette zum Spleißen und Verbinden von Glasfasern in einem Verteilerschrank, von dem die mit ankommenden Glasfasern verbundenen Glasfasern zu Endverbrauchern weiter geführt werden.

Üblicherweise haben derartige Spleißkassetten eine sogenannte Crimp-Spleißschutz-Ablage, die eine Platte mit zwei einander gegenüber liegenden Reihen von Fächern aufweist, in die die miteinander zu verbindenen, von beiden Seiten ankommenden Enden von Glasfasern eingelegt werden, die durch V-förmige Metallklammern miteinander verbunden werden. In der Mitte zwischen den beiden Reihen von Fächern befindet sich eine entsprechende Anzahl von Stegen, in die die V-förmigen, mit einem Schutzmaterial für die Glasfasern versehenen Klammern eingesteckt werden.

Mit Hilfe dieser Crimp-Spleißschutz-Ablagen werden üblicherweise bis zu zwölf Glasfasern gespleißt und abgelegt. Die Crimp-Spleißschutz-Ablage ist üblicherweise auf der Grundplatte der Spleißkassette fest geclipst.

Spleißkassetten der betrachteten Art werden im allgemeinen in einen Glasfaser-Verteilungsrahmen mit mehreren übereinander angeordneten Fächern oder Paneelen aufgenommen, die jeweils eine größere Anzahl von Kassetten enthalten.

Die Höhe eines solchen optischen Verteilungsrahmens ist begrenzt, damit die Glasfasern der Spleißkassetten gut handhabbar sind, weshalb nur eine bestimmte maximale Anzahl von Fächern übereinander gestapelt werden kann.

Der vorliegenden Erfindung liegt die Aufgabe zugrunde, eine Spleißkassette anzugeben, mit der die Signal-Kapazitäten beträchtlich erhöht werden können.

Diese Aufgabe wird erfindungsgemäß durch die Merkmale des Patentanspruchs 1 gelöst.

Vorteilhafte Ausgestaltungen der Erfindung sind in den Unteransprüchen gekennzeichnet.

Die Erfindung sieht vor, dass auf der Spleißkassette anstelle einer herkömmlichen Crimp-Spleißschutz-Ablage ein WDM-Filter befestigt ist Ein derartiger Filter ist eine optische Vorrichtung, die optische Strahlen aus mehreren Glasfasern in einer einzigen Faser kombiniert oder die optischen Strahlen einer einzigen Faser auf mehrere Glasfasern aufteilt.

In Ausgestaltung der Erfindung wird der WDM-Filter bzw. pWDM-Filter in einen Bügel eingesetzt, der in die Spleißkassette eingeclipst wird. Der Bügel hat im wesentlichen einen flachen U-förmigen Querschnitt und übergreift den WDM-Filter an dessen Oberseite und an den gegenüber liegenden Rändern, wobei der Bügel dicht an dem WDM-Filter anliegt.

In näheren Einzelheiten hat der Bügel einen rechteckigen plattenförmigen Abschnitt und zwei im rechten Winkel davon abstehende, leistenförmige Randabschnitte, die an ihren Außenseiten Vorsprünge zur Befestigung an Rippen der Spleißkassette haben.

An einem der Randabschnitte können zwei rechtwinklig nach außen abstehende Stege angeformt sein, die in entsprechend beabstandete Schlitze einer Rippe eingreifen, wobei an dem anderen Randabschnitt zwei ebenfalls beabstandete Vorsprünge angeformt sind, die im Querschnitt keilförmig sind und unter Federarmen einrasten, die von einer anderen Rippe abstehen.

Außerdem wird vorgeschlagen, dass der WDM-Filter von wenigstens einem Ansatz, bevorzugt von zwei flachen Ansätzen untergriffen wird, die an einem Randabschnitt angeformt sind und parallel zu dem die Oberseite des WDM-Filters überdeckenden plattenförmigen Abschnitt verlaufen.

Außerdem wird vorgeschlagen, dass zwischen den beiden leicht keilförmigen Vorsprüngen ein Steg nach außen, d.h. zur Seite der keilförmigen Vorsprünge vorsteht, der so bemessen ist, dass der Bügel zwischen den beiden Rippen der Spleißkassette kein seitliches Spiel hat.

Der Bügel ist zweckmäßigerweise einstückig aus Kunststoff hergestellt.

Der Bügel mit dem WDM-Filter wird vorteilhafteweise an der Stelle der Spleißkassette befestigt, an der bei einer herkömmlichen Spleißkassette die Crimp-Spleißschutz-Ablage angebracht ist. Wenn an einer herkömmlichen Spleißkassette die darauf befestigte Crimp-Spleißschutz-Ablage durch den erfindungsgemäßen Bügel mit dem daran gehaltenen WDM-Filter ausgetauscht werden soll, wird die üblicherweise vorgesehene Clips-Verbindung der Crimp-Spleißschutz-Ablage gelöst und statt dessen der Bügel mit dem WDM-Filter eingeclipst. Hierzu kann es notwendig sein, einen Steg zur Halterung der Crimp-Spleißschutz-Ablage zu entfernen, so dass der Bügel zwischen zwei Rippen der Spleißkassette festgeclipst werden kann.

Weitere Einzelheiten der Erfindung ergeben sich aus der nachfolgenden Beschreibung einer bevorzugten Ausführungsform der Erfindung. Es zeigen:
- Figur 1: eine Spleißkassette mit einer getrennt dargestellten Crimp-Spleißschutz-Ablage;
- Figur 2: die Crimp-Spleißschutz-Ablage im befestigten Zustand auf der Spleißkassette;
- Figur 3: die Spleißkassette der Figur 1 mit getrennt dargestelltem Bügel und WDM-Filter und
- Figur 4: den in die Spleißkassette eingeclipsten Zustand des Bügels und des WDM-Filters.

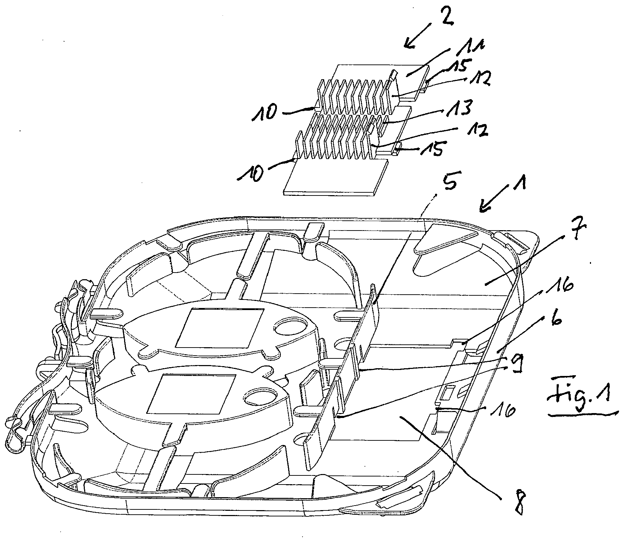

Die in Figur 1 dargestellte Spleißkassette 1 ist sowohl zur Aufnahme einer Crimp-Spleißschutz-Ablage 2 als auch - statt dessen - zum Befestigen eines einen WDM-Filter 3 aufnehmenden Bügels 4 geeignet. Die Spleißkassette 1 enthält zwei parallel im Abstand voneinander angeformte Rippen 5 und 6, zwischen denen aus der Grundplatte 7 der Spleißkassette 1 ein Fenster 8 ausgeschnitten ist.

Im unteren Randbereich der Darstellung in den Figuren enthält die Rippe 5 zwei schlitzförmige Aussparungen 9, in die zwei seitliche Vorsprünge 10 an einer Grundplatte 11 der Crimp-Spleißschutz-Ablage 2 oder aber zwei seitliche entsprechend stegartige Vorsprünge 11 an dem Bügel 4 einsetzbar sind, je nach dem, ob die Crimp-Spleißschutz-Ablage 2 oder der Bügel 4 mit dem WDM-Filter 3 auf der Spleißkassette 1 befestigt werden soll.

Die herkömmliche Crimp-Spleißschutz-Ablage 2 enthält zwei Reihen kammartiger Stege 12, die miteinander fluchtend einander gegenüber liegen und in die von beiden Seiten kommende Glasfasern eingelegt werden, die paarweise durch nicht dargestellte V-Metallteile verbunden werden, die in die in der Mitte zwischen den zwei Reihen 12 angeordneten Halterungen 13 eingeklemmt werden.

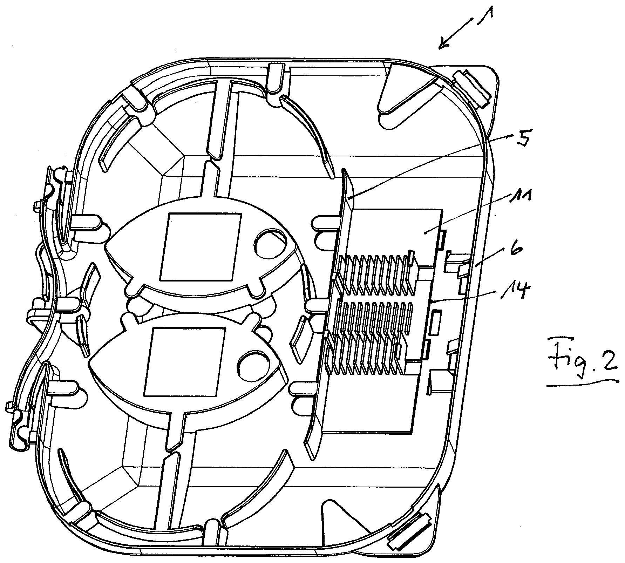

Figur 2 zeigt den eingesetzten Zustand der Crimp-Spleißschutz-Ablage 2, wobei sich der Rand 14 der Grundplatte 11 nicht bis zu der Rippe 6 erstreckt. Seitliche Vorsprünge 15 der Grundplatte 11 sind in Ausschnitten 16 der Grundplatte 7 der Spleißkassette 1 auf geeignete Weise gehalten.

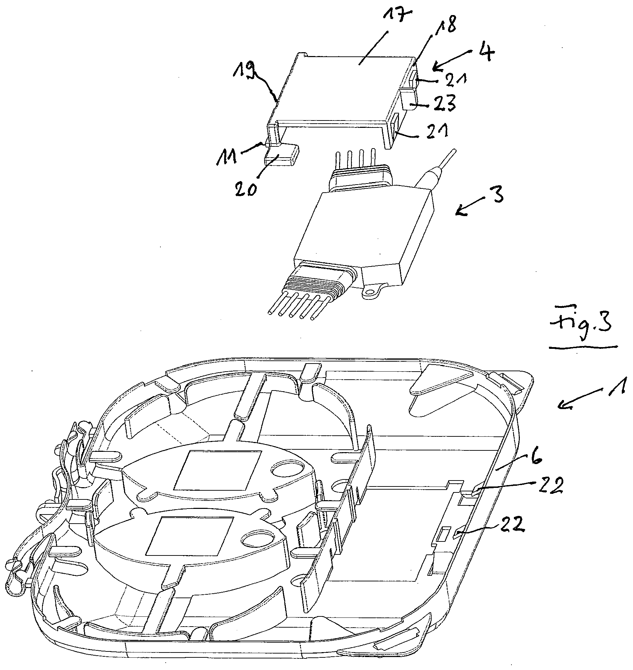

Figur 3 zeigt in einer perspektivischen Ansicht den Bügel 4, der auch als Halterung für den herkömmlichen WDM-Filter 3 bezeichnet werden kann. Der Bügel 4 hat einen etwa quadratischen plattenförmigen Abschnitt 17, an den zwei rechtwinklige Randabschnitte 18, 19 nach unten verlaufend angesetzt sind. An den Randabschnitt 19 sind zwei Stege 11 angeformt, die den Stegen 10 der Crimp-Spleißschutz-Ablage 2 entsprechen und in die Schlitze 9 der Rippe 5 einsteckbar sind. An dem Randabschnitt 19 ist an beiden Enden jeweils ein kleiner plattenförmiger Abschnitt 20 angeformt. Der WDM-Filter 3 wird von dem Bügel 4 in der dargestellten Ausrichtung dicht umgriffen, wobei der plattenförmige Abschnitt 17 auf der Oberseite des WDM-Filters 3 aufliegt, während die Randabschnitte 18, 19 und die kleinen plattenförmigen Abschnitte 20 an den Seiten und an der Unterseite des WDM-Filters 3 fest anliegen.

An dem Randabschnitt 18 sind zwei querschnittlich keilförmig sich nach oben verdickende Vorsprünge 21 angeformt, die beim Anbringen des Bügels 4 mit dem WDM-Filter 3 an der Kassette 1 zunächst zwei von der Innenwand der Rippe 6 schräg vorstehende angeformte Federarme 22 zurück drücken, um dann unter den Federarmen 22 einzurasten. Damit ist der Bügel 4 fest auf der Grundplatte 7 gehalten. Damit der Bügel 4, der nicht ganz so breit ist wie der Abstand zwischen den Rippen 5 und 6, nicht zwischen den Rippen verschiebbar ist, ist zwischen den keilförmigen Vorsprüngen 28 ein vorspringender Steg 23 angeformt, der so bemessen ist, dass er zusammen mit der Breite des plattenförmigen Abschnitts 17 eine Ausdehnung hat, die dem Abstand zwischen den beiden Rippen 5 und 6 entspricht.

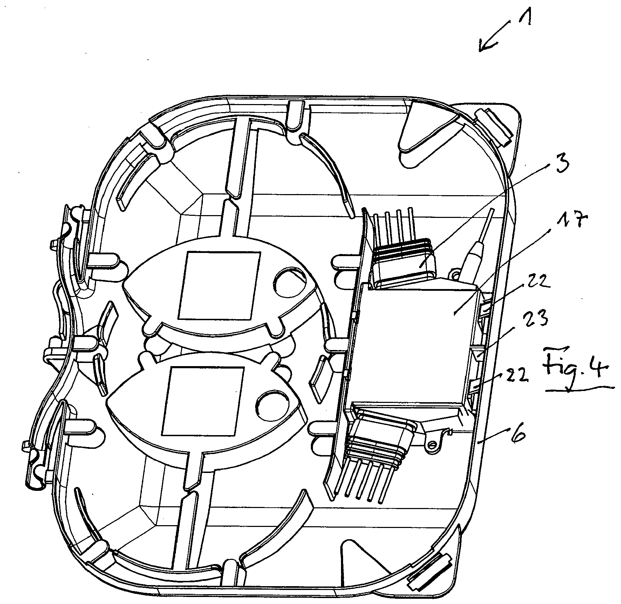

Figur 4 zeigt den auf der Spleißkassette 1 fest geclipsten Zustand des Bügels 4 mit dem WDM-Filter 3.

Es wird betont, dass die Erfindung nicht auf die beschriebenen und dargestellten Ausführungsformen beschränkt ist, Vielmehr sind alle offenbarten Merkmale auf jede sinnvolle Weise einzeln miteinander kombinierbar.

## Patentansprüche

1. Spleißkassette zum Spleißen und Verbinden von Glasfasern in einem Verteilerschrank,
**dadurch gekennzeichnet,**
**dass** anstelle einer herkömmlichen Crimp-Spleißschutz-Ablage (2) ein WDM-Filter (3) auf der Spleißkassette (1) befestigbar ist.

2. Spleißkassette nach Anspruch 1
**dadurch gekennzeichnet,**
**dass** der WDM-Filter (3) in einen Bügel (4) eingesetzt ist.

3. Spleißkassee nach Anspruch 1 oder 2,
**dadurch gekennzeichnet,**
**dass** der Bügel (4) in die Spleißkassette (1) eingeclipst ist.

4. Spleißkassette nach einem der Ansprüche 1 bis 3,
**dadurch gekennzeichnet,**
**dass** der Bügel (4) im wesentlichen einen flachen U-förmigen Querschnitt aufweist und den WDM-Filter (3) an der Oberseite und an den gegenüber liegenden Ränder dicht übergreift.

5. Spleißkassette nach einem der Ansprüche 1 bis 4,
**dadurch gekennzeichnet,**
**dass** der Bügel (4) einen plattenförmigen Abschnitt (17) und zwei abgewinkelte Randabschnitte (18, 19) aufweist, die Vorsprünge zur Befestigung an Rippen (5,6) der Spleißkassette (1) haben.

6. Spleißkassette nach einem der Ansprüche 1 bis 5,
**dadurch gekennzeichnet,**
**dass** an einem Randabschnitt (19) des Bügels (4) zwei abstehende Stege (11) angeformt sind, die in Schlitze (9) einer Rippe (5) eingreifen, und dass an dem anderen Randabschnitt (18) Vorsprünge (21) angeformt sind, die unter Federarmen (22) einrasten, die von der anderen Rippe (6) abstehen.

7. Spleißkassette nach einem der Ansprüche 1 bis 6,
**dadurch gekennzeichnet,**
**dass** an einem Randabschnitt (19) des Bügels (4) wenigstens ein Ansatz (20) parallel zu dem plattenförmigen Abschnitt (17) angeformt ist und WDM-Filter (3) untergreift.

8. Spleißkassette nach einem der Ansprüche 1 bis 7,
**dadurch gekennzeichnet,**
**dass** an beiden seitlichen Enden des Randabschnitts (19) des Bügels (4) jeweils ein Ansatz (20) angeformt ist, die den WDM-Filter (3) untergreifen.

9. Spleißkassette nach einem der Ansprüche 1 bis 8,
**dadurch gekennzeichnet,**
**dass** zwischen den beiden Vorsprüngen (21) ein Steg (23) nach außen vorsteht, der so bemessen ist, dass der Bügel (4) zwischen den Rippen (5, 6) kein seitliches Spiel hat.

10. Spleißkassette nach einem der Ansprüche 1 bis 9,
**dadurch gekennzeichnet,**
**dass** der Bügel (4) einstückig aus Kunststoff besteht.
